# EUROPEAN PATENT SPECIFICATION

(11) **EP 0 431 203 B1**
(45) Date of publication and mention of the grant of the patent: **24.11.1993**
(21) Application number: 89122258.0
(22) Date of filing: 02.12.1989
(51) Int. Cl.: A23L 1/164, A23L 1/18

(54) **Preparation of flakes**
Herstellung von Flocken
Préparation de flocons

(43) Date of publication of application: 12.06.1991
(73) Proprietor: SOCIETE DES PRODUITS NESTLE S.A., 1800 Vevey (CH)
(72) Inventor: Blanchard, Claude, CH-1804 Corsier s/Vevey (CH); Morand, Alfred, CH-1807 Blonay (CH); Schmidt, Robert Heinrich, CH-1623 Semsales (CH)

(56) References cited:
- EP-A- 0 326 253
- DE-A- 2 125 702
- US-A- 4 778 690
- FOOD MANUFACTURE, vol. 62, no. 1, January 1987, pages 27, 19, London, GB; "Extrusion: a revolution in food manufacture"
- PATENT ABSTRACTS OF JAPAN, vol. 12, no. 33 (C-472)(2880), 30 January 1988; & JP-A-62181750 (Tech. Res. Assoc. Extru. Cook Food Ind.) 10.08.1987

## Description

The present invention relates to a process and apparatus for the preparation of cereal flakes.

The traditional manufacture of cereal flakes by extrusion comprises the following steps:
1) The mixture of cereal flours and other ingredients is introduced in the extruder-cooker. Under the combined effect of the temperature and pressure, the mixture becomes thermoplastic.
2) The mixture is extruded through circular orifices where the dough undergoes an expansion caused by the sudden pressure drop and consequent vapourisation of the water and a rotary knife cuts the dough into spherical grains about the size of a small pea. At this stage, the grains contain about 16% moisture.
3) The grains are transported to two grinding rollers which flatten the grains to their well-known flake shape.
4) The flakes may then optionally be sprinkled with an appropriate solution (flavours, sugars, salt, oil, water, gums etc.) before roasting in an oven e.g. gas, electric in which the temperature diminishes progressively. The residual moisture content is from 1-3%.

DE-A-2125702 describes a method for preparing a puffed snack product resembling a French fried potato stick.

We have devised a different method where the mixture of cereal flours is extruded through a flat slit-like orifice to give a strand which method involves control of density by stretching and provides two important advantages:
a) Stretching controls the density and preserves the flaky layered, crumbly texture of the strand. If a similar density is obtained by flaking, the texture becomes too hard and abrasive.
b) The moisture content of the flakes immediately after formation is about half that of the traditional method and the drying can therefore be carried out in a reduced time.

Accordingly, the present invention provides a process for the preparation of cereal flakes which comprises extruding a dough at an elevated temperature from an extruder-cooker through a thin flat, slit-like orifice to form an expanded and puffed strand which is stretched until the density is from 75 to 200 g/litre to achieve a flaky crumbly texture then cut into the individual flakes which are finally roasted wherein the stretching of the strand of dough is carried out by introducing the strand of dough between the nip of a pair of stretching rollers rotating at a speed which increases the speed of the strand to a speed greater than that at which the dough is extruded to exert a traction on the dough.

The process of the invention is applicable to any kind of dough suitable for expansion by extrusion cooking either for sweet or for savoury products. The ingredients of the dough may be premixed, for example, in a screw-mixer and the premix then introduced into a hopper. The dough premix may be fed into the extruder-cooker at a flow rate e.g. from 10 to 100 kg/hr., which is controllable, for instance, by means of a screw at the base of the hopper. Water can be added to the mixture usually in an amount of less than 5% by weight either in the hopper or in the extruder-cooker and, if desired, materials such as vegetable oil or a sugar syrup may be added at the opening of the extruder-cooker to modify the degree of expansion. Advantageously, steam may be injected instead of, or partly in place of, the water. This boosting with steam aids the cooking, builds up the pressure and can increase the capacity by up to 50%.

The dough becomes thermoplastic in the extruder-cooker and is extruded through at least one slit like orifice. There may be several orifices e.g. from 2 to 20 and each orifice may conveniently have a depth of from 0.1 to 1 mm and a breadth of from 5 mm up to the breadth of the extruder e.g. from 80 to 100 mm. Generally, the depth of the orifice is from 0.25 to 0.75 mm. The breadth of the orifice depends on the desired width of the strand. For instance, a breadth of from 10 to 20 mm is suitable when the strand is to be cut only transversely to form the flakes. However, if desired, the breadth may be up to 100 mm whereupon the strands are cut, preferably by punching or stamping, both longitudinally and transversely to form the flakes. The speed of the strands of dough leaving the extrusion nozzle is usually from about 10 to 25 metres per minute.

After extrusion, the expanded and puffed strand of dough is stretched to reduce the expansion to achieve the desired density of the flakes, which is preferably from 80 to 160 g/litre and especially from 100 to 125 g/litre before being cut.

The stretching of the expanded and puffed strand of dough leaving the extruder is carried out by increasing the speed of the strand, usually from about 1.25 to 2. fold and is preferably carried out with a minimum of compression. Generally, after extrusion, the expanded and puffed strand of dough is transferred to any kind of means which serves to support the strand and prevents it falling under its own weight, such as a conveyor belt or adjustable rollers etc. Usually, the distance from the extruder orifice and the cutter is from 1 to 3 metres and preferably from 1.5 to 2.5 metres. Rollers are preferred to a conveyor belt as a supporting means because they can be more readily cleaned and cooled to prevent sticking of the hot extruded strand to the supporting means. When a conveyor belt is used to support the strand, it is possible that, by choosing the appropriate speed, the conveyor belt may stretch the strand to the appropriate density. However, the stretching is preferably carried out by the cutting means or by introducing the expanded and puffed strand of dough between the nip of a pair of stretching rollers rotating at a speed which will increase the speed of the strand to a speed greater than that at which the dough is extruded to exert a traction on the dough. The gap between the rollers should be small enough to enable the dough to be stretched but not so small that substantial compression of the dough takes place. It is also feasible that some stretching may be carried out by the conveyor belt and some by the pair of stretching rollers. Typically, the strands are transported from the extruder to the cutting means at a speed of from 15 to 50, preferably from 20 to 40 and especially from 25 to 35 metres per minute.

The cutting is carried out when the desired flaky crumbly texture is achieved and various cutting means may be employed. For instance, it is possible for the pair of stretching rollers to carry out the cutting by the provision of cogs or cutting edges. It is also possible for one cogged roller positioned above a conveyor belt to stretch and cut the dough, in which case it is necessary to determine the appropriate distance of the cogged roller from the extrusion nozzle and/or the appropriate temperature of the strand to ensure the right degree of brittleness. However, advantageously, the strands of dough pass through the nip of a pair of cutting rollers at least one of which is provided with cogs. Since a small degree of compression of the strands does occur as they pass between the stretching rollers, advantageously the speed of the cutting rollers is about 10% higher than that of the stretching rollers to compensate for the elongation produced by this compression.

Extruded strands which have a width equal to that of the final flakes only need to be cut transversely while strands that are wider than the normal width of a cereal flake may be cut both in a longitudinal and a transverse direction to the desired size, e.g. by two pairs of cutting rollers which punch or stamp the strands longitudinally and transversely consecutively, or by a single cutting means with the appropriate cutting profile, for instance, a pair of cooperating rollers the surface of one of which is alveolar, to produce flakes of the desired shape and size.

Since the hot extruded strand can heat up the cutting rollers, it is important to provide cooling means to keep the temperature of the rollers below 60° to prevent sticking of the flakes to the rollers.

The pressure required to cut a strand is usually from 50 to 150 kg/cm. The moisture content of the flakes at the cutting stage is usually from 5 to 10%, preferably from 6 to 9% by weight.

The cut flakes may then be roasted to a moisture content of from 1 to 4%, preferably from 2 to 3% by weight.

Conveniently, the roasting is carried out by any conventional means, for example, in an electric, gas or jet-zone oven with an oven temperature from 120°C to 170°C for from 5 to 7 minutes. Afterwards, the flakes may be cooled, for instance in a fluidised bed.

The thickness of the cereal flakes is usually from 0.5 to 2.5 mm, more usually from 1 to 2 mm.

The present invention also provides an apparatus for the preparation of cereal flakes which comprises an extruder-cooker having at least one thin, flat, slit-like orifice, means for stretching strands of dough extruded from the extruder-cooker, a cutting means to cut the stretched strands into flakes and a means for roasting the flakes characterised in that the stretching means is a pair of stretching rollers positioned downstream of the orifice of the extruder-cooker adapted to allow the strands to pass through the nip and adapted to rotate at a speed sufficient to stretch the strands appropriately.

The stretching means should be capable of achieving a density of from 75 to 200 g/litre, usually by increasing the speed of the strand leaving the extruder by from about 1.25 to 2- fold.

There may also be provided means which serves to support the strands of dough extruded from the extrusion cooker, for instance, a conveyor belt or one or more adjustable rollers.

The cutting means may be a pair of cutting rollers adapted to allow the stretched strands of dough to pass through the nip and to cut the stretched strands by means of cogs or cutting edges on at least one of the pair of cutting rollers.

When the extruded strands have a width equal to that of the final flake, the cutting means is adapted to cut them transversely to the desired length of the final flake. However, when the extruded strands have a width greater than that of the final flake, a separate cutting means may cut the strands longitudinally. Advantageously a single cutting means with the appropriate cutting profile may be provided to cut the strands both longitudinally and transversely e.g. by punching or stamping, to produce flakes of the desired shape e.g. a pair of cooperating rollers one of which is provided with alveoli having cutting edges of the required shape. In addition when the extruded strands have a width greater than that of the final flake it is also possible that the cutting means alone may serve to stretch the strands rendering the use of stretching rollers unnecessary. In this case, the cutting means advantageously comprises a pair of cooperating cutting rollers one of which is provided with alveoli having cutting edges of the required shape but which are offset by means of the cutting edges adapted to cut the strands transversely being offset relative to similar cutting edges of laterally adjacent alveoli. This ensures that the whole width of a strand is not cut transversely at any one time, in which case a part of the strand is being stretched while another part is being cut transversely.

There may also be provided cooling means to keep the temperature of the cutting rollers below 60°C to prevent the flakes sticking to the rollers. Such cooling means may be, for instance provided by cold water. As a precautionary measure in case any flakes stick to the rollers there is provided a means for removing such flakes from the rollers e.g. a jet of air trained in a tangential direction on to the surface of the rollers or a brush or scraper or an air blowing device e.g. by means of nozzles.

The means for roasting the flakes may be conventional, for example an electric, gas or jet-zone oven.

The invention will now be further illustrated by means of the accompanying drawings in which
- Figure 1: represents a diagrammatic side view of a suitable apparatus where two strands are extruded,
- Figure 2: represents a perspective view of part of the apparatus shown in Figure 1,
- Figure 3: represents a perspective view of part of an apparatus where sixteen strands are extruded and
- Figures 4 and 5: represent perspective views of cutting rollers the surfaces of which have a cutting profile shaped to cut the strands both transversely and longitudinally into the desired shape.

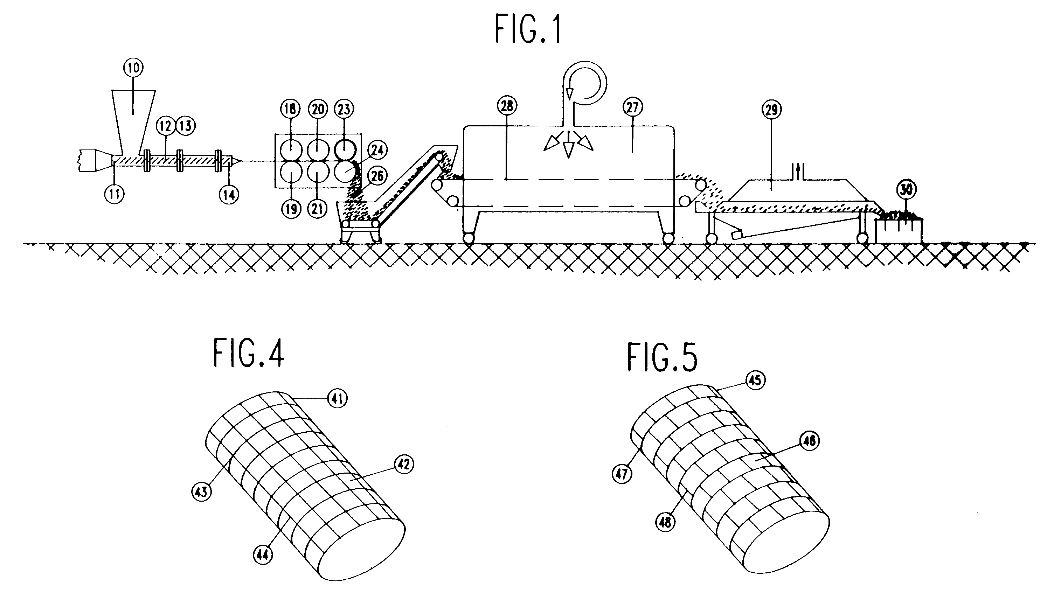

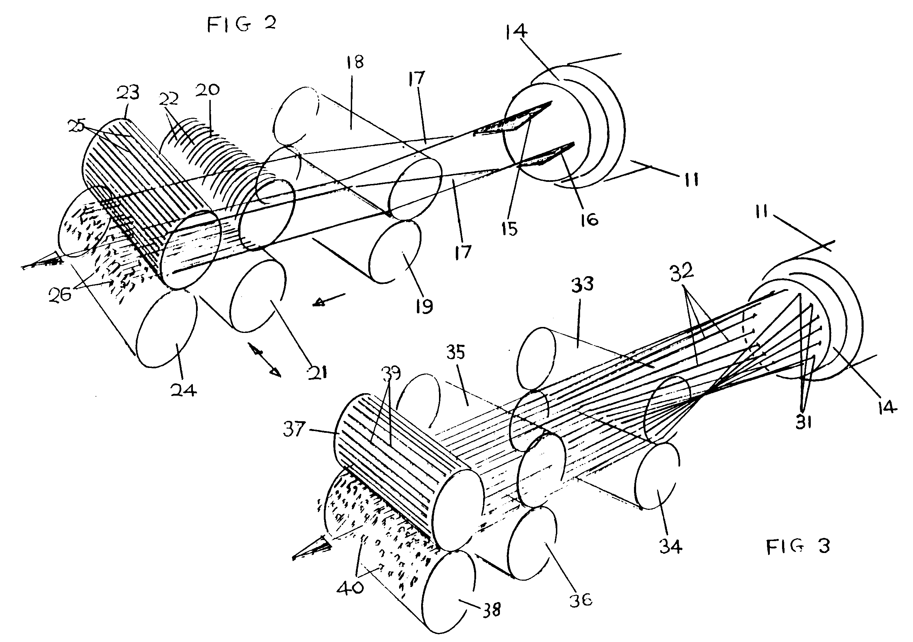

Referring to Figures 1 and 2 of the drawings, the apparatus comprises a hopper (10), an extruder-cooker (11) with two screws (12,13), an exit nozzle (14) provided with two slit-like orifices (15,16) each having dimensions of 0.5 mm x 90 mm for extruding strands of dough (17), a pair of stretching rollers (18,19), a first pair of cutting rollers (20,21) situated 2 metres from the orifices (15,16) provided with grooves (22) whose edges are adapted to cut each strand longitudinally into six strands, each of 15 mm breadth, a pair of cutting rollers (23,24) roller (23) being provided with cogs (25) for cutting each strand transversely into flakes (26) each flake having a length of about 15 mm and a breadth of about 15 mm, an electric oven (27) through which runs conveyor belt (28), a fluidised bed (29) and a collecting container (30).

In Figure 3, the extruder-cooker (11) has an exit nozzle (14) provided with sixteen slit-like orifices (31) arranged in a circle each having dimensions of 0.5 mm x 15 mm for extruding strands of dough (32), a pair of stretching rollers (33,34), a pair of synchronising rollers (35,36) and a pair of cutting rollers (37,38) roller (37) being provided with cogs (39) for cutting each strand into flakes (40) each about 15 mm in length.

Figure 4 represents the upper roller (41) of a pair of cutting rollers, whose surface is provided with alveoli (42) whose cutting edges (43,44) are so positioned that the alveoli form rows in both longitudinal and transversal directions, for cutting the strands into flakes in one cutting operation.

Figure 5 also represents the upper roller (45) of a pair of cutting rollers whose surface is provided with alveoli (46) with cutting edges (47,48) whereby the cutting edges (48) are offset relative to the cutting edges (47) of laterally adjacent alveoli.

In operation, a premix was made from the following ingredients:

| | |
|---|---|
| Rice flour | 58.7% |
| Milk powder 26% | 11.8% |
| Cocoa powder | 4.5% |
| Sugar | 12.0% |
| Malt extract | 13.0% |

Referring to Figures 1 and 2 this premix was fed to the hopper (10) and 0.8% syrup of malt was added. The premix was fed to the extruder-cooker (11) through an adjustable screw feeder at the base of the hopper at a flow rate of 300 kg/hr. and the appropriate amount of water was added directly into the extruder-cooker (11). The mixture in the extruder-cooker became thermoplastic under the influence of the temperature and pressure and was extruded through the orifices (15,16) as two strands (17) which expand and puff immediately upon extrusion into the atmosphere. At the start-up of the process, an operator takes the strands which are extruded at 20 m/min. and ensures that they travel side by side through the nip between stretching rollers (18,19) rotating at such a speed that the speed of the strands is increased to 30 m/min. so that the strands are stretched to achieve a density of 110 g/litre to give the desirable flaky, crumbly texture, then through the nip between the first pair of cutting rollers (20,21) for longitudinal cutting by the edges of grooves (22) and then through the nip between the second pair of cutting rollers (23,24) for transversal cutting by means of cogs (25) to give flakes (26). For cutting through the flakes, the shafts of the upper rollers (20) and (23) are pressed down with a force of 120 kg/cm by means of a hydraulic piston (not shown).

Once the dough strands have been initially guided through the nip of the rollers (18,19), they continue to travel automatically from the extruder. The moisture content of the flakes cut by the rollers (23,24) is 7-8%. The flakes fall onto the conveyor (28) where they are transported through the electric oven (27) for 4 minutes, the oven temperature being 130°C. After leaving the oven, the flakes pass to the fluidised bed (29) and then to the collecting container (30). The final moisture content of the flakes is 2-3%.

In the embodiment shown in Figure 3, the strands (32) which are extruded at 15 m/min. are passed through the nip between stretching rollers (33,34) rotating at such a speed that the speed of the strands is doubled thus stretching the strands to achieve a density of 120 g/litre. The strands then pass through the nip of synchronising rollers (35,36) and then through the nip between cutting rollers (37,38) for transverse cutting to give flakes (40) which are approximately square having sides about 15 mm long.

The synchronising rollers (35,36) ensure that the cutting rollers (37,38) rotate 10% faster than the stretching rollers (33,34) to compensate for the elongation produced by the small amount of compression of the strands as they pass between the stretching rollers, thus preventing the formation of waves in the strands.

The flakes are then roasted in a similar manner to that described and illustrated in Figures 1 and 2.

In the embodiment shown in Figure 4, a similar process is carried out to that described in Figures 1 and 2 except that only one pair of cutting rollers is used to punch or stamp the strand into flakes instead of two pairs.

In the embodiment shown in Figure 5, a similar process is carried out to that described in Figures 1 and 2 except that only one pair of cutting rollers is used to punch or stamp the strand into flakes and, in addition, the stretching rollers are eliminated. This is because the upper roller (45) has alveoli (46) with cutting edges (48) which are offset so that when a part of a strand is punched or stamped transversely the adjacent part is stretched. In this case, one or more supporting rollers may be present to support the strand between the extruder and the cutting rollers.

In the embodiments illustrated in Figures 4 and 5 the internal corners of the alveoli 42,46 may be curved concavely so that the cut flakes have convex shaped corners.

## Claims

1. A process for the preparation of cereal flakes which comprises extruding a dough at an elevated temperature from an extruder-cooker through a thin flat, slit-like orifice to form an expanded and puffed strand which is stretched until the density is from 75 to 200 g/litre to achieve a flaky, layered, crumbly texture, then cut into the individual flakes which are finally roasted
characterised in that the stretching of the strand of dough is carried out by introducing the strand of dough between the nip of a pair of stretching rollers rotating at a speed which increases the speed of the strand to a speed greater than that at which the dough is extruded to exert a traction on the dough.

2. A process according to claim 1 characterised in that the stretching of the strand of dough is carried out by the cutting means.

3. A process according to claim 1 characterised in that the strands of dough leave the extruder nozzle at a speed of from 10 to 25 metres/min. and are transported from the extruder to the cutting means at a speed of from 15 to 50 metres per minute.

4. A process according to claim 1 characterised in that the cutting is carried out by passing the stretched strands of dough through the nip of a pair of rollers at least one of which is provided with cogs or cutting edges.

5. A process according to claim 1 characterised in that the moisture content of the strands at the cutting stage is from 5 to 10% by weight.

6. A process according to claim 1 characterised in that the roasting of the flakes reduces the moisture content to from 1 to 4%.

7. An apparatus for the preparation of cereal flakes which comprises an extrusion cooker (11) having at least one thin, flat slit-like orifice (15,16), means (18,19) for stretching strands (17) of dough extruded from the extruder-cooker (11), a cutting means (20,21) to cut the stretched strands into flakes (26) and a means (27) for roasting the flakes
characterised in that the means for stretching the strands comprises a pair of stretching rollers (20,21) positioned downstream of the orifice (15,16) of the extruder-cooker (11) adapted to allow the strand (17) to pass through the nip and to rotate at a speed sufficient to stretch the strands.

8. An apparatus according to claim 7 characterised in that the cutting means is a pair of cutting rollers (20,21) adapted to allow the stretched strand (17) of dough to pass through the nip and to cut the stretched strands by means of cogs (25) or cutting edges on at least one of the pair of cutting rollers.

9. An apparatus according to claim 7 characterised in that the cutting means for cutting extruded strands having a width greater than that of the final flake, is a pair of cooperating rollers (41,45) one of which is provided with alveoli (42,46) of the required shape having cutting edges (43,44,47,48) adapted to punch or stamp the strands (17) both transversely and longitudinally into the flakes (26).

10. An apparatus according to claim 9 characterised in that the alveoli (46) are offset by means of the cutting edges (47,48) adapted to punch or stamp the strands (17) transversely being offset relative to similar cutting edges of laterally adjacent alveoli.

11. An apparatus according to claim 7 characterised in that there is provided means for supporting the strands of dough (17) extruded from the extruder-cooker (11).

12. An apparatus according to claim 7 characterised in that the pair of stretching rollers is provided with cogs or cutting edges to enable it to serve as cutting means as well as stretching means.

## Patentansprüche

1. Verfahren zur Herstellung von Getreideflocken, welches das Extrudieren eines Teiges mit erhöhter Temperatur aus einem Extruder-Kocher durch eine dünne, flache, schlitzähnliche Öffnung umfaßt, um einen expandierten und aufgeblähten Strang zu bilden, der bis auf eine Dichte von 75 bis 200 g/Liter gedehnt wird, um eine flockige, mehrschichtige, bröckelige Textur zu erzielen, und welcher dann zu einzelnen Flocken geschnitten wird, die letztlich geröstet werden, dadurch gekennzeichnet, daß das Dehnen des Teigstranges durch Einführen des Teigstranges in den Einzugspalt zweier Dehnrollen ausgeführt wird, die sich mit einer Geschwindigkeit drehen, welche die Geschwindigkeit des Stranges auf eine Geschwindigkeit erhöht, die größer ist als jene, mit welcher der Teig extrudiert wird, um eine Zugkraft auf den Teig auszuüben.

2. Verfahren nach Anspruch 1, dadurch gekennzeichnet, daß das Dehnen des Teigstranges von den Schneidmitteln ausgeführt wird.

3. Verfahren nach Anspruch 1, dadurch gekennzeichnet, daß die Teigstränge die Extruderdüse mit einer Geschwindigkeit von 10 bis 25 m/min verlassen und vom Extruder zu den Schneidmitteln mit einer Geschwindigkeit von 15 bis 50 m/min transportiert werden.

4. Verfahren nach Anspruch 1, dadurch gekennzeichnet, daß das Schneiden durch Durchleiten der gedehnten Teigstränge durch den Spalt zweier Rollen ausgeführt wird, von denen zumindest eine mit Zähnen oder Schneidkanten versehen ist.

5. Verfahren nach Anspruch 1, dadurch gekennzeichnet, daß der Feuchtigkeitsgehalt der Stränge in der Schneidestufe 5 bis 10 Gew.-% beträgt.

6. Verfahren nach Anspruch 1, dadurch gekennzeichnet, daß das Rösten der Flocken den Feuchtigkeitsgehalt auf 1 bis 4 % verringert.

7. Vorrichtung zur Herstellung von Getreideflocken, welche einen Extrusionskocher (11) mit zumindest einer dünnen, flachen, schlitzähnlichen Öffnung (15, 16), Mittel (18, 19) zum Dehnen der aus dem Extruder-Kocher (11) extrudierten Teigstränge (17), Schneidmitttel (20, 21) zum Schneiden der gedehnten Stränge zu Flocken (26) und Mittel (27) zum Rösten der Flocken aufweist, dadurch gekennzeichnet, daß die Mittel zum Dehnen der Stränge zwei Dehnrollen (20, 21) aufweisen, die der Öffnung (15, 16) des Extruder-Kochers (11) nachgeordnet sind, durch deren Einzugspalt die Stränge (17) durchleitbar sind und welche mit einer Geschwindigkeit drehbar sind, die ausreicht, um die Stränge zu dehnen.

8. Vorrichtung nach Anspruch 7, dadurch gekennzeichnet, daß die Schneidmittel zwei Schneidrollen (20, 21) sind, durch deren Spalt die gedehnten Teigstränge (17) durchleitbar sind und welche die gedehnten Stränge mit Hilfe von Zähnen (25) oder Schneidkanten auf zumindest einer der beiden Schneidrollen schneiden.

9. Vorrichtung nach Anspruch 7, dadurch gekennzeichnet, daß die Schneidmittel zum Schneiden von extrudierten Strängen, deren Breite größer ist als jene der fertigen Flocken, zwei zusammenwirkende Rollen (41, 45) sind, von denen eine mit Waben (42, 46) der erforderlichen Form versehen ist, die Schneidkanten (43, 44, 47, 48) aufweisen, welche die Stränge (17) sowohl in Querrichtung als auch in Längsrichtung zu Flocken (26) stanzen.

10. Vorrichtung nach Anspruch 9, dadurch gekennzeichnet, daß die Waben (46) in Bezug auf jene Schneidkanten (47, 48) zueinander versetzt sind, welche die Stränge (17) in Querrichtung stanzen und relativ zu gleichartigen Schneidkanten der seitlich angrenzenden Waben versetzt sind.

11. Vorrichtung nach Anspruch 7, dadurch gekennzeichnet, daß Mittel zum Abstützen der aus dem Extruder-Kocher (11) extrudierten Teigstränge (17) vorgesehen sind.

12. Vorrichtung nach Anspruch 7, dadurch gekennzeichnet, daß die beiden Dehnrollen mit Zähnen oder Schneidkanten versehen sind, um zu ermögliche, daß sie sowohl als Schneidmittel als auch als Dehnmittel dienen.

## Revendications

1. Procédé pour la préparation de flocons de céréales, qui consiste à extruder une pâte à une température élevée à partir d'un extrudeur-cuiseur à travers un orifice mince et plat, analogue à une fente, pour former un cordon expansé et gonflé qui est étiré jusqu'à ce que la densité soit de 75 à 200 g/litre pour produire une texture friable, stratifiée, feuilletée, puis coupé en flocons individuels qui sont finalement rôtis, caractérisé en ce que l'étirage du cordon de pâte est effectué par introduction du cordon de pâte dans la zone de serrage d'une paire de rouleaux d'étirage tournant à une vitesse qui élève la vitesse du cordon à une vitesse supérieure à celle à laquelle la pâte est extrudée afin d'exercer une traction sur la pâte.

2. Procédé selon la revendication 1, caractérisé en ce que l'étirage du cordon de pâte est exécuté par le moyen de coupe.

3. Procédé selon la revendication 1, caractérisé en ce que les cordons de pâte quittent la buse de l'extrudeur à une vitesse de 10 à 25 mètres/minute et sont transportés depuis l'extrudeur jusqu'au moyen de coupe à une vitesse de 15 à 50 mètres par minute.

4. Procédé selon la revendication 1, caractérisé en ce que la coupe est exécutée par passage des cordons de pâte étirés dans la zone de serrage d'une paire de rouleaux dont au moins l'un est pourvu de dents ou d'arêtes de coupe.

5. Procédé selon la revendication 1, caractérisé en ce que la teneur en humidité des cordons au stade de coupe est de 5 à 10 % en poids.

6. Procédé selon la revendication 1, caractérisé en ce que le rôtissage des flocons abaisse la teneur en humidité à une valeur de 1 à 4 %.

7. Appareil pour la préparation de flocons de céréales qui comporte un cuiseur (11) à extrusion ayant au moins un orifice mince et plat (15, 16) analogue à une fente, un moyen (18, 19) pour étirer les cordons (17) de pâte extrudés depuis l'extrudeur-cuiseur (11), un moyen de coupe (20, 21) pour couper les cordons étirés en flocons (26) et un moyen (27) pour rôtir les flocons, caractérisé en ce que le moyen pour étirer les cordons comporte une paire de rouleaux d'étirage (20, 21) placés en aval de l'orifice (15, 16) de l'extrudeur-cuiseur (11), conçus pour permettre aux cordons (17) de passer dans la zone de serrage et pour tourner à une vitesse suffisante pour étirer les cordons.

8. Appareil selon la revendication 7, caractérisé en ce que le moyen de coupe est une paire de rouleaux de coupe (20, 21) conçus pour permettre aux cordons de pâte étirés (17) de passer dans la zone de serrage et pour couper les cordons étirés au moyen de dents (25) ou d'arêtes de coupe sur au moins l'un des deux rouleaux de coupe.

9. Appareil selon la revendication 7, caractérisé en ce que le moyen de coupe destiné à couper des cordons extrudés ayant une largeur supérieure à celle du flocon final est constitué d'une paire de rouleaux coopérants (41, 45) dont l'un est pourvu d'alvéoles (42, 46) de la forme demandée, ayant des arêtes de coupe (43, 44, 47, 48) conçues pour poinçonner ou découper les cordons (17) à la fois transversalement et longitudinalement, en flocons (26).

10. Appareil selon la revendication 9, caractérisé en ce que les alvéoles (46) sont décalés par le fait que les arêtes de coupe (47, 48), conçues pour poinçonner ou découper les cordons (17) transversalement, sont décalées par rapport à des arêtes de coupe similaires d'alvéoles latéralement adjacents.

11. Appareil selon la revendication 7, caractérisé en ce qu'il est prévu des moyens pour supporter les cordons de pâte (17) extrudés depuis l'extrudeur-cuiseur (11).

12. Appareil selon la revendication 7, caractérisé en ce que la paire de rouleaux d'étirage est pourvue de dents ou d'arêtes de coupe pour lui pemettre de servir de moyen de coupe ainsi que de moyen d'étirage.
